# EUROPÄISCHE PATENTSCHRIFT

(11) **EP 0 553 180 B1**
(45) Veröffentlichungstag und Bekanntmachung des Hinweises auf die Patenterteilung: **21.12.1994**
(21) Anmeldenummer: 91918259.2
(22) Anmeldetag: 11.10.1991
(51) Int. Cl.: B01D 53/08, B01J 8/12

(54) **ADSORPTIONSMITTEL-, INSBESONDERE WANDERBETTREAKTOR**
ADSORPTION AGENT REACTOR, ESPECIALLY FLUIDISED BED REACTOR
REACTEUR A MILIEU D'ADSORPTION, NOTAMMENT A LIT FLUIDISE

(30) Priorität: 16.10.1990 DE 4032738; 07.08.1991 DE 4126146
(43) Veröffentlichungstag der Anmeldung: 04.08.1993
(73) Patentinhaber: STEAG Aktiengesellschaft, 45128 Essen (DE)
(72) Erfinder: BRÜGGENDICK, Hermann, D-4224 Hünxe (DE)
(86) Internationale Anmeldenummer: EP9101938
(87) Internationale Veröffentlichungsnummer: WO9206770

(56) Entgegenhaltungen:
- EP-A- 264 669
- EP-A- 376 356
- DE-A- 2 626 939
- DE-U- 9 014 347
- GB-A- 2 035 128

## Beschreibung

Die Erfindung bezieht sich auf einen Adsorptionsmittel-, insbesondere Wanderbettreaktor, der im Querstrom von dem zu behandelnden Fluid durchströmt wird und zwei im wesentlichen vertikale, fluiddurchlässige Wände aufweist. Insbesondere bezieht sich die Erfindung auf ein fluiddurchlässiges Wandbauteil, das zum Einsatz als mindestens eine Wand in dem Adsorptionsmittelreaktor geeignet ist.

Adsorptionsmittelreaktoren mit einem kontinuierlichen oder quasi-kontinuierlich wandernden Bett aus einem körnigen Adsorbens werden in zunehmendem Umfang zur Abgasreinigung verwendet. Bei der Abgasreinigung werden bestimmte Fluid-Strömungslängen und damit bestimmte Reaktorquerschnitte benötigt. Soweit das zu reinigende Abgas hochtoxische Schadstoffe, z.B. Dioxine, Furane oder Schwermetalle enthält, werden diese aber bereits in einer relativ dünnen eintrittsseitigen Vertikalschicht der Wanderbettsäule adsorptiv abgeschieden. In herkömmlichen Reaktoren ohne vertikale Unterteilung muß die Gesamtmenge des im Reaktor befindlichen Adsorptionsmittels nach dem Austrag als Sondermüll entsorgt, beispielsweise bei 1.200°C und einer Verweildauer von mindestens zwei Sekunden verbrannt werden. Diese Entsorgung ist extrem kostspielig.

Aus der DE-C 19 46 457 ist ein Wanderbettreaktor bekannt, bei dem zusätzlich zu eintritts- und austrittseitigen Führungsblechjalousien jeweils eine zweite Reihe von Entlastungsblechen im Reaktor eingebaut, die im wesentlichen parallel zu den Innenseiten der Führungsbleche angeordnet sind. Die Entlastungsbleche nehmen einen Teil des statischen Seitendrucks des abwärtsfließenden Adsorbens auf und bewirken, daß das Adsorbens zwischen zwei Führungsblechen von Seitendruck entlastet werden und sich mit dem Hauptstrom des Adsorbens in der Mitte des Wanderbetts vereinigen kann.

Aus der DE-A 26 26 939 ist ferner ein Wanderbettreaktor der gattungsgemäßen Art bekannt, bei dem im Reaktorbett zwei Adsorptionsmittelschichten gebildet und durch gasdurchlässige Wände voneinander getrennt sind. Die bekannten gasdurchlässigen Wände sind entweder Lochplatten oder als gegensinnig geneigte Jalousiekonstruktionen ausgebildet. Sie dienen zur Variation der Durchtrittsgeschwindigkeit des Fluids und sollen eine Kompromißlösung zwischen einer möglichst weitgehenden Beladung des gesamten Adsorbens einerseits und einer ausreichenden Reinigung des Abgases andererseits darstellen. Eine zuverlässige Trennung in stark toxisch belastete und wenig belastete Adsorptionsmittelschichten ist bei dieser bekannten Ausführung weder vorgesehen noch ohne weiteres möglich.

Zur zuverlässigen Unterteilung eines Wanderbetts in zwei oder mehr vertikale Schichten unterschiedlicher Schadstoffbelastung wurden bisher Lochplatten eingesetzt. Dabei mußten relativ große Öffnungen in den Unterteilungswänden vorgesehen werden, um die Gefahr rascher Verstopfungen, Strömungswiderstandserhöhungen und ungleichmäßiger Fluidverteilungen über den Fließbettkörper zu verringern. Derartige bekannte Wände hatten aber den Nachteil, daß keine Exakte Partikeltrennung zwischen den benachbarten Vertikalschichten erreicht werden konnte. Bekannte gegensinnig geneigte Jalousiewände (DE-A 26 26 939) haben einen erheblichen Platzbedarf im Reaktorinnenraum und rufen relativ starke Schüttgut-Aufböschungen hervor, die den Strömungswiderstand über die Reaktorhöhe ungleichmäßig machen.

Aufgabe der Erfindung ist es, die Voraussetzungen für eine einfache, genau definierbare Trennung zwischen zwei vertikalen Schichten unter zuverlässiger Verhinderung eines Partikelübertritts und ohne merkliche Beeinträchtigung der Fluidströme zu erreichen.

Erfindungsgemäß wird diese Aufgabe gelöst durch ein fluiddurchlässiges Wandbauteil gemäß Patentanspruch 1.

Das fluiddurchlässige Wandbauteil eignet sich sowohl als Schüttgut-Begrenzungswand an einer Reaktor-Außenseite als auch als Schüttgut-Unterteilungswand zwischen zwei Kammern eines Reaktors.

Bei dem neuen Adsorptionsmittel-, insbesondere Wanderbettreaktor besteht mindestens eine Wand aus dem erfindungsgemäßen Wandbauteil, dessen Spaltsieb anströmseitig angeordnet und mit von oben nach unten verlaufenden Spaltbegrenzungselementen versehen ist, wobei mindestens eine Wand aus dem erfindungsgemäßen Wandbauteil besteht, dessen Spaltsieb anströmseitig angeordnet und mit von oben nach unten verlaufenden Spaltbegrenzungselementen versehen ist, wobei die Breite des Spalts auf die Körnung des Schüttguts so abgestimmt ist, daß die Feststoffpartikel bis auf Feinkornpartikel im anströmseitigen Teil des Behandlungsraums zurückgehalten werden; und wobei an der Abströmseite des Stabilisierungsgitters die Jalousiekonstruktion mit den zu den Spaltbegrenzungselementen querverlaufenden Lamellen angeordnet ist.

Die erfindungsgemäß vorgesehene Kombination eines über die gesamte Begrenzungswand verlaufenden Spaltsiebs mit dem Stabilisierungsgitter hat in einem Adsorptionsmittelreaktor entscheidende bauliche und funktionelle Vorteile: Das Spaltsieb bildet eine praktische glatte, störstellenfreie Fläche, an welcher der Partikelstrom des Adsorptionsmittels im wesentlichen in einer Ebene von oben nach unten fließen kann. Partikel normaler Größe werden von der Begrenzungswand anströmseitig zurückgehalten. Der Fluidstrom wird dagegen über die gesamte Höhe der Begrenzungswand praktisch ungehindert durchgelassen. Die kreuzende Anordnung der Spaltbegrenzungselemente, des Stabilisierungsgitters und der Lamellen gewährleistet eine äußerst hohe Formbeständigkeit Steifigkeit und -stabilität, so daß sich die Eigenschaften und die Form der Begrenzungswand selbst dann nicht ändern, wenn die Belastungen zu beiden Seiten der Begrenzungswand stark schwanken (beispielsweise durch selektive Beschickung oder Abführung des Adsorptionsmittels zu beiden Seiten einer Unterteilungswand).

Eine weitere Erhöhung der Stabilität der Begrenzungswand läßt sich in Weiterbildung der Erfindung dadurch erreichen, daß das Stabilisierungsgitter auf der Abströmseite mehrere Bandprofile aufweist, welche die Verbindungselemente kreuzen, wobei die Flachseiten der Bandprofile von oben nach unten und im wesentlichen parallel zur Fluidströmungsrichtung verlaufen.

Je nach Anordnung der Jalousiekonstruktion an einer äußeren Begrenzungswand oder einer im Reaktor selbst gelegenen Unterteilungswand haben die Jalousielamellen vorzugsweise unterschiedliche Neigungsrichtungen. In Zuordnung zu einer Reaktor-Austrittswand haben die Jalousielamellen vor allem die Aufgabe, durch die Spaltbegrenzungselemente durchgetretene Feinstkornpartikel aufzufangen und nach Möglichkeit direkt in eine Abführeinrichtung abzuleiten. In dieser Funktion sind die Lamellen, ausgehend von den Bandprofilen, schräg nach oben geneigt, und zwar vorzugsweise unter einem Winkel von ca. 25 bis 35° zur Vertikalebene.

In Zuordnung zu einer Unterteilungswand haben die Lamellen der Jalousiekonstruktion dagegen eine Neigung nach unten. Ein Neigungswinkel von 15 bis 25°, insbesondere ca. 20° zur Vertikalen hat sich als günstig erwiesen, da bei diesem Neigungswinkel die Vorteile einer zuverlässigen Abweisung des Partikelstroms auf der Austrittsseite der Unterteilungswand und einer relativ geringen Wandstärke und kompakten Bauweise kombiniert sind.

Die Verwendung eines über den gesamten abströmseitigen Austrittsquerschnitt des Reaktors verlaufenden Spaltsiebs in Verbindung mit dem Stabilisierungsgitter und etwa vertikal verlaufenden Bandprofilen hat zwei entscheidende Vorteile: Einerseits gelangen nur Feinkornpartikel aus dem Reaktorraum in den Bereich der Jalousiekonstruktion, so daß die Tendenz zur Aufböschung entscheidend verringert ist; andererseits sorgen die im Stabilisierungsgitter vertikal verlaufenden beabstandeten Bandprofile für eine problemlose Abführung der Feinkornpartikel des Schüttguts nach unten, da sie zwischen dem Spaltsieb einerseits und der aus geneigten Lamellen bestehenden Jalousiekonstruktion vertikale durchgehende Kanäle oder Schächte begrenzen. Der Öffnungsquerschnitt für das Fluid bleibt über die gesamte Höhe der austrittsseitigen Wand gleichmäßig verteilt; dies ändert sich auch nicht mit fortschreitendem Reaktorbetrieb. Aufböschungen, die bei allen bekannten Konstruktionen Ursache für mehr oder weniger starke Ungleichmäßigkeiten im Strömungswiderstand und damit im Strömungsprofil des Fluids gewesen sind, gibt es praktisch nicht mehr.

Als Unterteilungswand schafft das erfindungsgemäße Wandbauteil die Voraussetzung dafür, daß die Adsorptionsmittelströme in die beiden Vertikalkammern zu beiden Seiten der Wand unterschiedliche Geschwindigkeiten haben können.

Die dem Sondermüll zuzuführende eintrittsseitige Vertikalschicht kann vor ihrer Austragung weitgehend beladen werden. Die sich daran anschließende, wenigstens eine weitere Vertikalschicht im Hauptkörper des Adsorptionsmittelbetts kann dann nach einem völlig anderen Zyklus kontinuierlich oder chargenweise ausgetragen werden. Diese von hochtoxischen Spurenelementen weitgehend freie Schicht kann mit relativ einfachen Mitteln entsorgt, wiederaufbereitet oder in normalen Verbrennungsanlagen entsprechend kostengünstig verbrannt werden.

Die Dicke und der Querschnitt der einzelnen Kammern und damit die Lage der Unterteilungswände sind in Abstimmung auf bestimmte Inhaltsstoffe bzw. Schadstoffe im Fluid und im Hinblick auf ein gewünschtes Abscheideverhalten wählbar. Insbesondere können mehrere Unterteilungswände derart im Reaktor eingebaut werden, daß das querströmende Fluid mindestens zwei Trennwände und drei Kammern nacheinander durchströmt. In den einzelnen von Unterteilungswänden getrennten Kammern können auch unterschiedliche Füllgüter (z.B. mehr oder weniger stark wirksame Adsorptionsmittel) mit gleichen oder unterschiedlichen Füllständen eingesetzt werden. Die Erfindung ist daher unabhängig von dem verwendeten Querstrommedium und den Adsorptionsmittelströmen mit prinzipiell den gleichen Vorteilen verwendbar.

Der Abstand der wenigstens einen Unterteilungswand zur Fluid-Austrittswand ist vorzugsweise mehrfach größer als derjenige zur Fluid-Eintrittswand. Dies hat den Vorteil, daß die eintrittsseitige Vertikalkammer relativ kleine Abmessungen hat und das Schichtvolumen auf die zur Adsorption der flüchtigen hochtoxischen Stoffe ausreichende Größe minimiert werden kann.

Das erfindungsgemäße Wandbauteil kann bei einem Adsorptionsmittelreaktor sowohl als Begrenzungswand an der Fluidaustrittsseite des Reaktors als auch als wenigstens eine Unterteilungswand mit den beschriebenen Vorteilen zum Einsatz kommen. Andererseits kann aber die austrittsseitige Begrenzungswand auch bei einem nicht unterteilten Reaktor und - umgekehrt - eine oder mehrere Unterteilungswände der erfindungsgemäßen Art kann oder können in Verbindung mit einem ansonsten herkömmlichen Reaktor verwendet werden.

Vorteilhafte Weiterbildungen der Erfindung sind in den Unteransprüchen gekennzeichnet.

Im folgenden wird die Erfindung anhand von in der Zeichnung schematisch dargestellten Ausführungsbeispielen näher erläutert. In der Zeichnung zeigen:
- Fig. 1: eine schematische Vertikalschnittansicht durch einen Teil eines Wanderbettreaktors mit erfindungsgemäß ausgebildeten Unterteilungs- und Begrenzungswänden;
- Fig. 2: einen Horizontalschnitt durch einen Teil eines erfindungsgemäßen Wandbauteils, d.h. einer Unterteilungswand bzw. einen Teil der Reaktor-Austrittswand gemäß Fig. 1 mit einem Spaltboden aus einem Spaltsieb, einem Stabilisierungsgitter und einer Jalousiekonstruktion (Schnitt II-II in Fig. 1);
- Fig. 3: eine gegenüber Fig. 2 verkleinerte Schnittansicht durch einen Teil der Unterteilungswand;
- Fig. 4: eine Schnittansicht entsprechend Fig. 3 durch einen Teil der Reaktor-Austrittswand gemäß Fig. 1;
- Fig. 5: eine gegenüber der Ausführungsform gemäß Fig. 4 abgewandelte Spaltbodenanordnung; und
- Fig. 6: eine weitere abgewandelte Ausführungsform einer Spaltbodenanordnung, wie sie sowohl an der Austrittsswand des Reaktors als auch in der Unterteilungswand Verwendung finden kann.

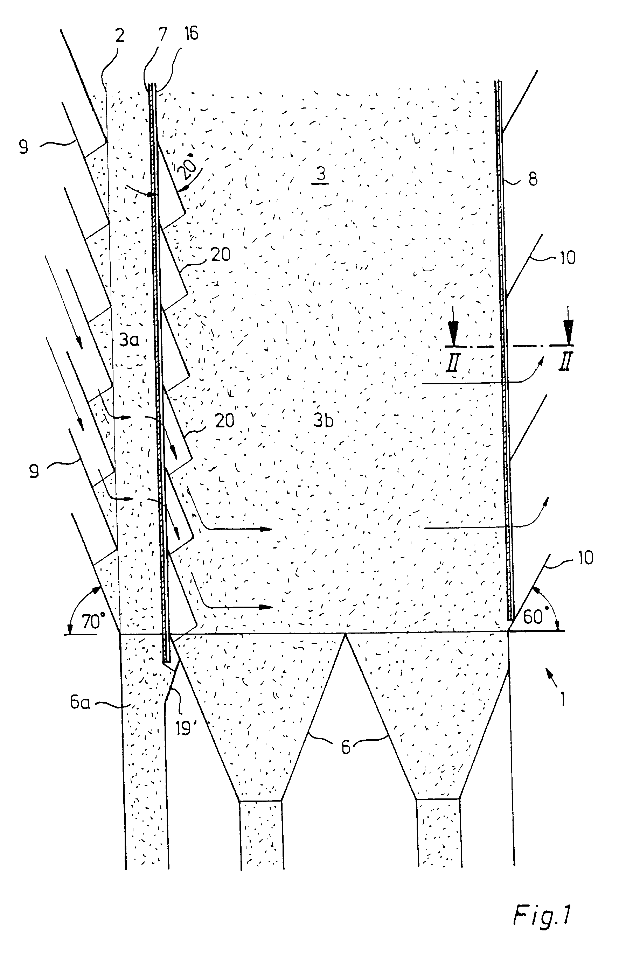

Fig. 1 zeigt einen schematischen Vertikalschnitt durch einen Teil eines Ausführungsbeispiels des Adsorptionsmittelreaktors 1, im folgenden "Adsorber" genannt. Der Adsorber 1 hat in dem beschriebenen Ausführungsbeispiel rechteckigen Querschnitt. Er weist einen Reaktionsbehälter 2 auf, der einen Behandlungsraum 3 umgrenzt. In dem Reaktionsbehälter 2 sind ein Aufgabeboden mit matrixartig angeordneten Aufgabetrichtern zur gleichmäßigen Verteilung des Schüttguts auf den Querschnitt des Behandlungsraums 3 und ein Abzugsboden 6, 6a mit mehreren Abzugstrichtern zum Abziehen des Schüttguts aus dem Behandlungsraum 3 vorgesehen.

Eine im wesentlichen vertikal verlaufende Unterteilungswand 7 trennt den Behandlungsraum 3 in zwei Kammern 3a und 3b. Die Kammer 3a ist der Eintrittsjalousie 9 zugewandt und die Kammer 3b erstreckt sich von der Abströmseite der Unterteilungswand 7 bis zur gegenüberliegenden Reaktor-Austrittswand 8.

Das zu behandelnde Fluid - im Ausführungsbeispiel Rauchgas - durchströmt den Adsorber 1 in der durch Linien bzw. Pfeile veranschaulichten Weise. Das Rauchgas tritt unten in den Adsorber 1 ein, umströmt den Abzugsboden 6 mit den Abzugstrichtern und Austragsstutzen und tritt durch einen Gaseinlaßkasten und die Eintrittsjalousie 9 über den größten Teil der Bauhöhe des Reaktionsbehälters 2 in die einströmseitige Behandlungskammer 3a ein. Der Anstellwinkel, der die Einlaßjalousie 9 bildenden Bleche beträgt bei dem beschriebenen Ausführungsbeispiel 70° ± 5° zur Horizontalen. Das Bett in der Behandlungskammer wird, wie die Strömungslinien zeigen, in Querrichtung durchströmt. Das Fluid tritt abströmseitig durch die Austrittswand 8 und die Jalousiekonstruktion 10 in einen Gasauslaßkasten aus. Die austrittsseitige Jalousiekonstruktion 10 weist vertikal übereinander angeordnete Lamellen auf, die in dem beschriebenen Ausführungsbeispiel unter einem Winkel von 60° ± 5°, vorzugsweise 60° bis 65°, zur Horizontalen angestellt sind.

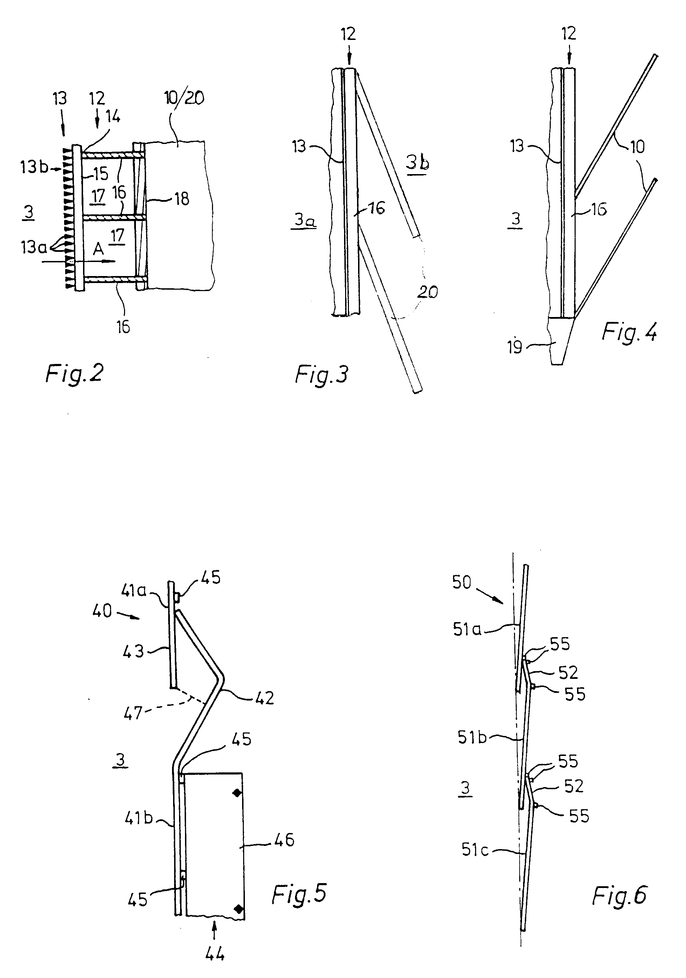

Die erfindungsgemäß neuen Aspekte beziehen sich vor allem auf die Gestaltung der bei dem beschriebenen Ausführungsbeispiel vertikal verlaufenden Unterteilungswand 7 und die ganz ähnlich gestaltete Austrittswand 8 des Reaktionsbehälters 2. Diese neuen Aspekte sollen im folgenden anhand der schematischen Teilansichten gemäß den Fig. 2 bis 4 näher erläutert werden.

Wie vor allem die vergrößerte Horizontalschnittansicht gemäß Fig. 2 zeigt, ist die Unterteilungswand 7 bzw. die Wand 8 als Spaltboden ausgebildet. Letzterer besteht aus einem anströmseitigen Spaltsieb 13 mit von oben nach unten verlaufenden stabförmigen Spaltbegrenzungselementen 13a von einheitlichem dreieckigen Querschnitt. Spaltsieb 13 ist mit einem Stabilisierungsgitter 14 sandwichartig verbunden. Bei üblicher Körnung des als Adsorptionsmittel verwendeten Aktivkoks haben die Spaltbegrenzungselemente 13a eine Spaltweite von 1,25mm ± 0,5mm, eine dem Aktivkoksbett zugewandete Profilseitenlänge von 2,2mm ± 0,5mm und eine Tiefe zum Stabilisierungsgitter von 4,5mm ± 1mm. Diese Abmessungen entsprechen jedoch nur einem bei einem Prototypen realisierten Ausführungsbeispiel; insbesondere die Weite des Spalts 13b zwischen zwei benachbarten Spaltbegrenzungselementen 13a richtet sich zweckmäßigerweise nach der Größe der Schüttgutteilchen, die von dem Spaltsieb in der eintrittsseitigen Behandlungskammer 3a (bzw. bei der Austrittswandung 8 in der austrittsseitigen Behandlungskammer 3b) zurückgehalten werden sollen.

Das Stabilisierungsgitter besteht gemäß Fig. 2 aus Verbindungsstäben 15, die zu den Spaltbegrenzungselementen 13a querverlaufen, sowie in größerem Abstand parallel zu den Spaltbegrenzungselementen angeordneten Bandprofilen 16. Die längsverlaufenden stabförmigen Spaltbegrenzungselemente 13a sind mit den in größerem Abstand übereinander angeordneten Verbindungsstäben 15 punktverschweißt; auf der anderen Seite sind die Bandprofile 16 mit den querverlaufenden Verbindungsstäben 15 verschweißt. Fakultativ können die den Verbindungsstäben 15 abgewandten Schmalseiten in der in Fig. 2 dargestellten Weise mit gedrehten Vierkantstäben 18 verbunden, insbesondere verschweißt sein. Diese Vierkantstäbe sind als Baueinheit mit dem Bandprofilen 16 (für andere Zwecke) im Handel erhältlich und werden daher auch hier verwendet. Die Vierkantstäbe 18 können auch anstelle der rechteckigen oder runden Verbindungsstäbe 15 vorgesehen sein.

Wie oben gesagt, ist die Austrittswand 8 der Reaktionskammer 3 bei dem beschriebenen Ausführungsbeispiel mit dem gleichen etwa vertikal verlaufenden Spaltboden 12 wie die Unterteilungswand 7 versehen. Insofern wird an den Spaltböden 12 beider Wände 7 und 8 das Schüttgut auf der Anströmseite zumindest insoweit zurückgehalten, als sein Teilchendurchmesser größer ist als die Spaltweite 13b des Spaltsiebs 13. Soweit Kleinkornpartikel durch die Spalte 13b in Fluid-Durchströmungsrichtung (Pfeil A in Fig. 2) die Spalte 13b durchdringen können, erreichen sie zwischen den Flachseiten der Profile 16 gebildete vertikale Kanäle 17 und fallen durch diese (durchgehenden) Kanäle nach unten bis in einen Austragsbereich, der für die Austrittswand in Fig. 4 mit 19 bezeichnet ist. Im Austragsbereich werden diese Feinkornpartikel entweder dem benachbarten Austragstrichter des Abzugsbodens 6 wieder zugeführt oder auch ggf. getrennt abgeführt, um die technologisch ungünstigen Staubbestandteile laufend zu reduzieren.

Anders als bei herkömmlichen Querstromadsorbern bilden sich auf den geneigt angeordneten Jalousielamellen 10 an der Austrittsseite des Reaktionsbehälters 2 keine merklichen Schüttgutaufböschungen, so daß das Fluid einem an der Abströmseite über die gesamte Höhe des Reaktionsbehälters einheitlichen Strömungswiderstand begegnet. Insofern ist auch der Neigungswinkel der einzelnen Lamellenbleche 10 der Jalousie unkritisch; vorzugsweise ist der Neigungswinkel aber genügend groß, um auf die Lamellen 10 auftreffendes Schüttgut in die Kanäle 17 zurückzuführen bzw. abfließen zu lassen. Zu diesem Zweck hat sich ein Winkel von ca. 60° ± 5° zur Horizontalebene für die Lamellen 10 als zweckmäßig erwiesen.

Bei im übrigen übereinstimmender Ausbildung der Spaltböden der Wände 7 und 8 hat die Unterteilungswand 7 an der der Kammer 3b zugewandten Abströmseite eine andere Anordnung der Jalousielamellen 20. Die Lamellen 20 sind vom Spaltboden 12 aus schräg nach unten und in Richtung der Kammer 3b geneigt angeordnet. Ein Neigungwinkel zur Vertikalen von 20° ± 5° hat sich als günstig erwiesen, um einerseits einen relativ freien Fluiddurchtritt zu gewährleisten und andererseits einen Schüttgutübertritt von der Kammer 3b in die eintrittsseitige Kammer 3a zuverlässig zu verhindern. Bei dem spitzen Winkel zur Vertikalen ist auch der Platzbedarf der Wand 7 einschließlich der Lamellen 20 im Reaktor noch annehmbar gering.

Wie zu sehen ist, sind die Schüttgutsäulen in den durch die Wand 7 voneinander getrennten Kammern 3a und 3b durchgehend bis in den ihnen jeweils einzeln zugeordneten Abzugsbereich voneinander getrennt. Insbesondere hat die die eintrittsseitige Schicht aufnehmende eintrittsseitige Kammer 3a eigene Abzugstrichter 6a. Die durch die Spaltbegrenzungselemente 13a aus der Kammer 3a austretenden größeren Partikel fallen bei Eintritt in den Raum zwischen den Bandprofilen 16 durch die Kanäle 17 vertikal nach unten und werden von der Wand 19' in den Abzugstrichter 6a abgeführt. Ein Übertritt dieser beladenen Teilchen in die Kammer 3b wird verhindert. Die in der relativ schmalen Kammer 3a befindliche Adsorptionsmittelsäule kann unabhängig von dem Hauptbett in der Kammer 3b über den Austrag 6a entleert und der geeigneten Entsorgung, beispielsweise als Sondermüll einer Verbrennungsanlage zugeführt werden. In dieser relativ dünnen Schicht werden erfahrungsgemäß nahezu sämtliche hochgiftigen Anteile, wie Dioxine und Furane, adsorptiv abgeschieden. Nach Durchtritt durch die Unterteilungswand 7 werden die anderen Schadstoffe auf einer beispielsweise 9fach größeren Weglänge des Fluids in der austrittsnahen anschließenden Kammer 3b adsorptiv abgeschieden. Die Entsorgung des verbrauchten bzw. beladenen Adsorptionsmittels aus der Kammer 3b ist vergleichsweise einfach und problemlos möglich. Dieses Adsorptionsmittel kann ggf. auch regeneriert und in den Reaktionsbehälter 2 zurückgeführt werden.

Eine durchgehende Ausbildung sowohl der Spaltbegrenzungselemente 13a als auch der zu diesen (mit wesentlich größerem Abstand) parallel verlaufenden Bandprofile 16 ist auch Kostengründen in der Regel vorzuziehen. Andererseits können diese vertikal verlaufenden Komponenten 13a und 16 aber auch aus mehreren Teilen entweder auf Stoß oder unter Verzahnung oder Überlappung zusammengefügt werden. Insbesondere für die Bandprofile 16 reicht es aus, wenn sie sich über eine Teillänge der Reaktorhöhe derart erstrecken, daß an ihnen die Lamellen der Jalousie 10 befestigt, insbesondere angeschweißt werden können. Eine Unterbrechung der Bandprofile 16 ist für den zuverlässigen Abzug der Kleinkornteilchen durch die Kanalabschnitte 17 ohne Bedeutung, da ein Teilchenaustausch zwischen nebeneinanderliegenden Kanälen 17 die Teilchenführung von oben nach unten nicht beeinträchtigt und auch die geneigten Lamellen 10 eine Richtwirkung schräg nach unten haben.

Die Fig. 5 und 6 zeigen Ausführungsformen von Spaltböden 40 bzw. 50, bei denen das Spaltsieh jeweils aus mehreren vertikalen Abschnitten 41a, 41b bzw. 51a..51c besteht, die überlappend angeordnet sind. Bei der Ausführungsform gemäß Fig. 5 ist jeder Spaltsiebabschnitt an seinem oberen Ende 42 zweimal gekröpft und hintergreift das untere Ende des höheren Spaltsiebabschnitts 41a. Die einzelnen Spaltbegrenzungsstäbe sind in den überlappenden Spaltsiebabschnitten 41a und 41b miteinander vertikal ausgerichtet. Auch bei der abgewandelten Ausführungsform gemäß Fig. 5 ist ein Stabilisierungsgitter 44 mit querverlaufenden Verbindungsstäben 45 und mit Abzugskanäle 17 begrenzenden Bandprofilen 46 vorgesehen. Die Bandprofile 46 sind jedoch vertikal unterbrochen und nur den ebenen Teilen der Spaltsiebabschnitte 41a bzw. 41b zugeordnet. Die mit den Bandprofilen 46 verbundenen Jalousielamellen sind in den Fig. 5 und 6 nicht dargestellt.

Bei der Ausführungsform in Fig. 5 ist die vertikale Begrenzungsebene des Schüttgutbettes im Überlappungsbereich der Spaltsiebabschnitte 41a und 41b unterbrochen. Dort bildet sich eine kleine Aufböschung 47. Wegen des Freiraums im Bereich der Überlappungsstelle jenseits der Aufböschung 47 fällt die Erhöhung des Strömungswiderstandes dort nicht ins Gewicht. Die Unterbrechung der Spaltbegrenzungselemente bzw. der zwischen diesen gebildeten Spalte 13b hat aber den Vorteil, daß in Spalten 13b gefangene, insbesondere längliche Schüttgutpartikel abschnittsweise, nämlich im Bereich der Aufböschung 47, aus der Spaltführung freikommen und sich umorientieren können.

Ein ähnlicher Effekt wird bei der in Fig. 6 dargestellten abgewandelten Ausführungsform erreicht. Die wirksamen Spaltbegrenzungselemente in den Spaltsiebabschnitten 51a bis 51c verlaufen überwiegend etwas geneigt zur generell vertikalen Wanderrichtung des Schüttguts in der Behandlungskammer 3. Wegen der Schrägneigung der Spaltsiebabschnitte ist bei der Ausführungsform gemäß Fig. 6 nur eine Kröpfung im Überlappungsbereich 52 vorgesehen.

Auch bei der Ausführungsform gemäß Fig. 6 ist ein Stabilisierungsgitter den Spaltsiebabschnitten 51a..51c jeweils einzeln zugeordnet. Dargestellt sind in Fig. 6 nur die querverlaufenden Verbindungsstäbe 55.

Im Rahmen des Erfindungsgedankens sind zahlreiche Abwandlungen möglich. So können die einzelnen zum Spaltboden 12 gehörigen Komponenten überwiegend abgerundete Kanten haben und unter Berücksichtigung der Stabilisierungsanforderungen große Abstände und/oder geringe Wandstärken haben. Die Abströmseite kann ggf. auch horizontal gekrümmt oder mehreckig und abschnittsweise eben ausgebildet sein. Die Ausbildung der Jalousie ist wegen der besonderen Stütz- und Haltefunktion des Spaltbodens 12, 40 bzw. 50 unkritisch. Die Größe der Kanäle sollte möglichst so gewählt werden, daß einerseits der Platzbedarf gering ist und andererseits ein zuverlässiges Abführen der das Spaltsieb durchdringenden Schüttgutteilchen unter Schwerkrafteinfluß gewährleistet ist.

## Patentansprüche

1. Fluiddurchlässiges Wandbauteil (7, 8) in sandwichartiger Konstruktion, aufweisend:
ein Spaltsieb (13) mit im wesentlichen parallel verlaufenden Spaltbegrenzungselementen (13a); und
ein Stabilisierungsgitter (14), das zu den Spaltbegrenzungselementen querverlaufende Verbindungselemente (14) und
eine Jalousiekonstruktion mit zu den Spaltbegrenzungselementen querverlaufenden Lamellen (10, 20) aufweist.

2. Wandbauteil nach Anspruch 1, dadurch gekennzeichnet, daß das Stabilisierungsgitter (14; 44) mehrere Bandprofile (16; 46) aufweist, welche die Verbindungselemente (15; 45; 55) kreuzen.

3. Wandbauteil nach Anspruch 1 oder 2, dadurch gekennzeichnet, daß die Spaltbegrenzungselemente (13a) etwa dreieckförmige Querschnittsprofile haben, deren eine Seite die Begrenzungsfläche der Wand bildet und deren gegenüberliegende Ecke an querverlaufenden Verbindungselementen (15) des Stabilisierungsgitters (14) abgestützt ist.

4. Wandbauteil nach einem der Ansprüche 1 bis 3, dadurch gekennzeichnet, daß die Spaltbegrenzungselemente (13a), die quer-verlaufenden Verbindungselemente (15), die Bandprofile (16) und die Innenkanten von übereinander angeordneten Jalousielamellen (10; 20) abwechselnd im wesentlichen rechtwinklig gekreuzt verlaufen.

5. Wandbauteil nach einem der Ansprüche 1 bis 4, dadurch gekennzeichnet, daß die Spaltbegrenzungselemente (10) mit den querverlaufenden Verbindungselementen (15) punktverschweißt sind.

6. Wandbauteil nach einem der Ansprüche 1 bis 5, dadurch gekennzeichnet, daß zwischen jeweils zwei benachbarten Bandprofilen (16) des Stabilisierungsgitters (14) ein im wesentlichen vertikaler Kanal (17) zum Abführen von durch das Spaltsieb durchgetretenden Kleinkornpartikeln vorgesehen ist.

7. Wandhauteil nach einem der Ansprüche 1 bis 6, dadurch gekennzeichnet, daß die Lamellen (10; 20) der Jalousiekonstruktion zu den stabförmigen Stabbegrenzungselementen geneigt angeordnet sind.

8. Adsorptionsmittel-, insbesondere Wanderbettreaktor, der im Querstrom von dem zu behandelnden Fluid durchströmt wird und zwei im wesentlichen vertikale, fluiddurchlässige Wände aufweist, wobei mindestens eine Wand aus einem Wandbauteil (7, 8) nach einem der Ansprüche 1 bis 7 besteht, dessen Spaltsieb (13; 41, 51) anströmseitig angeordnet und mit von oben nach unten verlaufenden Spaltbegrenzungselementen (13a) versehen ist, wobei die Breite des Spalts (13b) auf die Körnung des Schüttguts so abgestimmt ist, daß die Feststoffpartikel bis auf Feinkornpartikel im anströmseitigen Teil des Behandlungsraums (3, 3a) zurückgehalten werden; und wobei an der Abströmseite des Stabilisierungsgitters (14; 44) die Jalousiekonstruktion mit den zu den Spaltbegrenzungselementen querverlaufenden Lamellen (10; 20) angeordnet ist.

9. Reaktor nach Anspruch 8, dadurch gekennzeichnet, daß die Flachseiten der die Verbindungselemente (15; 45; 55) kreuzenden Bandprofile (16; 46) von oben nach unten und im wesentlichen parallel zur Fluidströmungsrichtung (A) verlaufen.

10. Reaktor nach Anspruch 8 oder 9, dadurch gekennzeichnet, daß die Spaltbegrenzungselemente (13a) etwa dreieckförmige Querschnittsprofile haben, deren eine Seite vom Fluid angeströmt wird und deren der Anströmseite gegenüberliegende Ecke mit den querverlaufenden Verbindungselementen (15; 45; 55) des Stabilisierungsgitters (14, 44) verbunden ist.

11. Reaktor nach Anspruch 9 oder 10, dadurch gekennzeichnet, daß zwischen jeweils zwei benachbarten Bandprofilen (16) des Stabilisierungsgitters (14) ein im wesentlichen vertikaler Kanal (17) zum Abführen von durch das Spaltsieb durchgetretenden Kleinkornpartikeln vorgesehen ist.

12. Reaktor nach Anspruch 11, dadurch gekennzeichnet, daß die zwischen den Bandprofilen (16) gebildeten Kanäle (17) am unteren Ende in einen Austragstrichter münden.

13. Reaktor nach einem der Ansprüche 8 bis 12, dadurch gekennzeichnet, daß die Spaltbegrenzungselemente (13a) als gerade Stäbe ausgebildet sind.

14. Reaktor nach einem der Ansprüche 8 bis 13, dadurch gekennzeichnet, daß das Spaltsieb (4', 5') aus mehreren vertikalen Abschnitten (41a, 41b; 51a ... 51c) besteht, die derart überlappend angeordnet sind, daß der jeweils höher gelegene Spaltsiebabschnitt (41a; 51a) den tieferen Abschnitt (41b, 51b) zum Behandlungsraum (3) hin übergreift.

15. Reaktor nach Anspruch 14, dadurch gekennzeichnet, daß das obere Ende (42; 52) jedes Spaltsiebabschnitts (41a, 41b; 51a ... 51c) gekröpft ist.

16. Reaktor nach Anspruch 14 oder 15, dadurch gekennzeichnet, daß die einzelnen Spaltbegrenzungselemente (13) jedes Spaltsiebabschnitts (41a; 51a) mit denjenigen der benachbarten Spaltsiebabschnitte (41b; 51b) ausgerichtet sind.

17. Reaktor nach Anspruch 15 oder 16, dadurch gekennzeichnet, daß jedem Spaltsiebabschnitt (41a, 41b) ein eigenes Stabilisierungsgitter (44) zugeordnet ist, das mit einem ebenen Bereich des Spaltsiebabschnitts verbunden ist.

18. Reaktor nach einem der Ansprüche 8 bis 17, dadurch gekennzeichnet, daß das Spaltsieb (13) einer fluiddurchlässigen Wand (8) das Reaktorbett (3) auf der Fluidaustrittsseite begrenzt.

19. Reaktor nach Anspruch 18, dadurch gekennzeichnet, daß die Jalousiekonstruktion Lamellen (10) aufweist, die schräg nach oben geneigt angeordnet sind.

20. Reaktor nach Anspruch 19, dadurch gekennzeichnet, daß die Jalousielamellen (10) unter einem Winkel zwischen 25 und 35° zur Vertikalen geneigt angeordnet sind.

21. Reaktor nach den Ansprüchen 11 und 19 oder 20, dadurch gekennzeichnet, daß die Lamellen (10) der Jalousiekonstruktion zu den vertikalen Kanälen (17) derart geneigt angeordnet, daß das Schüttgut auf den Lamellen unter Schwerkrafteinfluß in die Kanäle gelenkt wird.

22. Reaktor nach einem der Ansprüche 8 bis 21, dadurch gekennzeichnet, daß das Reaktorbett durch wenigstens eine im wesentlichen vertikale, fluiddurchlässige Wand (7) in Kammern (3a, 3b) unterteilt ist und daß an der Abströmseite des mit dem Spaltsieb (13) verbundenen Stabilisierungsgitters (14) eine Jalousiekonstruktion mit schräg nach unten geneigten Lamellen (20) vorgesehen ist.

23. Reaktor nach Anspruch 22, dadurch gekennzeichnet, daß die Jalousielamellen (20) unter einem Winkel zwischen 15 und 25° zur Vertikalen geneigt angeordnet sind.

24. Reaktor nach Anspruch 22 oder 23, dadurch gekennzeichnet, daß den durch die Unterteilungswand (7) getrennten Kammern (3a, 3b) separate Adsorptionsmittel-Abführeinrichtungen (6a, 6) zugeordnet sind, durch die die Bettsäulen in den Kammern selektiv abführbar und einstellbar sind.

25. Reaktor nach einem der Ansprüche 22 bis 24, dadurch gekennzeichnet, daß der Abstand der wenigstens einen Unterteilungswand (7) zur Fluid-Austrittswand (8) mehrfach größer als derjenige zur Fluid-Eintrittswand (9) ist.

## Claims

1. Wall component (7, 8) permeable by liquid, in sandwich like construction and comprising a wedge-wire screen (13) with substantially parallelly extending gap-bounding elements (13a) and a stabilising grid (14), which comprises connecting elements (15), which extend transversely to the gap-bounding elements, and a venetian blind construction with louvres (10, 20), which extend transversely to the gap-bounding elements.

2. Wall component according to claim 1, characterised thereby, that the stabilising grid (14; 44) comprises several tie profiles (16; 46), which cross the connecting elements (15; 45; 55).

3. Wall component according to claim 1 or 2, characterised thereby, that the gap-bounding elements (13a) have about triangular cross-sectional profiles, the one side of which forms the bounding surface of the wall and the opposite corner of which is supported at transversely extending connecting elements (15) of the stabilising grid (14).

4. Wall component according to one of the claims 1 to 3, characterised thereby, that the gap-bounding elements (13a), the transversely extending connecting elements (15), the tie profiles (16) and the inward edges of venetian blind louvres (10; 20), which are arranged one above the other, are arranged to be crossing substantially at right angles in alternation.

5. Wall component according to one of the claims 1 to 4, characterised thereby, that the gap-bounding elements (13a) are spot-welded to the transversely extending connecting elements (15).

6. Wall component according to one of the claims 1 to 5, characterised thereby, that a substantially vertical channel (17) for the discharge of small-grained particles, which have passed through the wedge-wire screen, is provided between each two neighbouring tie profiles (16) of the stabilising grid (14).

7. Wall component according to one of the claims 1 to 6, characterised thereby, that the louvres (10; 20) of the venetian blind construction are arranged to be inclined to the rod-shaped gap-bounding elements.

8. Adsorption medium reactor, in particular moving bed reactor, which is flowed through in cross-current by the fluid to be treated and comprises two substantially vertical walls permeable by fluid, wherein at least one wall consists of a wall component according to one of the claims 1 to 7, the wedge-wire screen (13; 41, 51) of which is arranged at the leading side and provided with gap-bounding elements (13a) extending downwardly from above, wherein the width of the gap (13b) is so matched to the grain size range of the pourable stock that the solid substance particles except for fine-grained particles are held back in the leading part of the treatment chamber (3, 3a) and wherein the venetian blind construction with the louvres (10; 20), which extend transversely to the gap-bounding elements, is arranged at the trailing side of the stabilising grid (14; 44).

9. Reactor according to claim 8, characterised thereby, that the flat sides of the tie profiles (16; 46), which cross the connecting elements (15; 45; 55), extend downwardly from above and substantially parallelly to the fluid flow direction (A).

10. Reactor according to claim 8 or 9, characterised thereby, that the gap-bounding elements (13a) have about triangular cross-sectional profiles, the one side of which is flowed towards by the fluid and the corner of which lying opposite to the leading side is connected with the transversely extending connecting elements (15; 45; 55) of the stabilising grid (14; 44).

11. Reactor according to claim 9 or 10, characterised thereby, that a substantially vertical channel (17) for the discharge of small-grained particles, which have passed through the wedge-wire screen, is provided between each two neighbouring tie profiles (16) of the stabilising grid (14).

12. Reactor according to claim 11, characterised thereby, that the channels (17) formed between the tie profiles (16) open out into a discharge funnel at the lower end.

13. Reactor according to one of the claims 8 to 12, characterised thereby, that the gap-bounding elements (13a) are constructed as straight rods.

14. Reactor according to one of the claims 8 to 13, characterised thereby, that the wedge-wire screen (4', 5') consists of several vertical portions (41a, 41b; 51a to 51c), which are arranged to be overlapping in such a manner that the respectively higher wedge-wire screen portion (41a; 51a) overlaps the lower portion (41b, 51b) towards the treatment chamber (3).

15. Reactor according to claim 14, characterised thereby, that the upper end (42; 52) of each wedge-wire screen portion (41a, 41b; 51a to 51c) is cranked.

16. Reactor according to claim 14 or 15, characterised thereby, that the individual gap-bounding elements (13a) of each wedge-wire screen portion (41a; 51a) are aligned with those of the neighbouring wedge-wire screen portions (41b; 51b).

17. Reactor according to claim 15 or 16, characterised thereby, that each wedge-wire screen portion (41a, 41b) is associated with individual stabilising grid (44), which is connected with a planar region of the wedge-wire screen portion.

18. Reactor according to one of the claims 8 to 17, characterised thereby, that the wedge-wire screen (13) of a wall (8), which is permeable by fluid, bounds the reactor bed (3) on the fluid exit side.

19. Reactor according to claim 18, characterised thereby, that the venetian blind construction comprises louvres (10), which are arranged to be inclined obliquely upwards.

20. Reactor according to claim 19, characterised thereby, that the venetian blind louvres (10) are arranged to be inclined at an angle between 25° and 35° to the vertical.

21. Reactor according to the claims 11 and 19 or 20, characterised thereby, that the louvres (10) of the venetian blind construction are arranged to be inclined to the vertical channels (17) in such a manner that the pourable stock on the louvres is steered into the channels under the influence of gravitational force.

22. Reactor according to one of the claims 8 to 21, characterised thereby, that the reactor bed is subdivided into chambers (3a, 3b) by at least one substantially vertical wall (7), which is permeable by fluid, and that a venetian blind construction with louvres (20), which are inclined obliquely downwards, is provided at the trailing side of the stabilising grid (14) connected with the wedge-wire screen (13).

23. Reactor according to claim 22, characterised thereby, that the venetian blind louvres (20) are arranged to be inclined at an angle between 15° and 25° to the vertical.

24. Reactor according to claim 22 or 23, characterised thereby, that the chambers (3a, 3b) separated by the subdividing wall (7) are associated with separate adsorption medium discharge equipments (6a, 6), by which the bed columns in the chambers are selectively dischargeable and adjustable.

25. Wall component according to one of the claims 22 to 24, characterised thereby, that the spacing of the at least one subdividing wall (7) from the fluid exit wall (8) is several times greater than that from the fluid entry wall (9).

## Revendications

1. Composant de construction de paroi (7, 8) perméable au fluide en une construction en sandwich, comprenant :
un tamis à fentes (13) avec des éléments de délimitation de fentes (13a) s'étendant essentiellement parallèlement; et
une grille de stabilisation (14) qui présente des éléments de liaison (14) s'étendant transversalement aux éléments de délimitation de fentes et
une construction à jalousie avec des lamelles (10, 20) s'étendant transversalement aux éléments de délimitation de fentes.

2. Composant de construction de paroi selon la revendication 1, caractérisé en ce que la grille de stabilisation (14; 44) présente plusieurs profils en bande (16; 46) qui croisent les éléments de liaison (15; 45; 55).

3. Composant de construction de paroi selon la revendication 1 ou 2, caractérisé en ce que les éléments de délimitation de fentes (13a) ont des profils en section transversale à peu près triangulaires dont un côté constitue la face de délimitation de la paroi et dont le coin opposé prend appui sur des éléments de liaison s'étendant transversalement (15) de la grille de stabilisation.

4. Composant de construction de paroi selon l'une des revendications 1 à 3, caractérisé en ce que les éléments de délimitation de fentes (13a), les éléments de liaison (15) s'étendant transversalement, les profils en bandes (16) et les arêtes internes de lamelles à jalousie disposées les unes au-dessus des autres (10; 20) s'étendent en alternance en se croisant essentiellement à angles droits.

5. Composant de construction de paroi selon l'une des revendications 1 à 4, caractérisé en ce que les éléments de délimitation de fentes (10) sont soudés par points aux éléments de liaison (15) s'étendant transversalement.

6. Composant de construction de paroi selon l'une des revendications 1 à 5, caractérisé en ce qu'il est prévu entre respectivement deux profils en bande avoisinants (16) de la grille de stabilisation (14), un canal (17) essentiellement vertical pour évacuer des particules à grain fin passant à travers le tamis à fentes.

7. Composant de construction de paroi selon l'une des revendications 1 à 6, caractérisé en ce que les lamelles (10; 20) de la construction à jalousie sont disposées suivant une inclinaison relativement aux éléments de délimitation de fentes en forme de tige.

8. Réacteur à moyen d'adsorption, notamment de lit mobile qui est traversé suivant un flux transversal par le fluide à traiter et qui présente deux parois perméables au fluide, essentiellement verticales, au moins une paroi étant constituée par un composant de construction de paroi (7, 8) selon l'une des revendications 1 à 7, dont le tamis à fentes (13; 41, 51) est disposé côté écoulement affluent et est pourvu d'éléments de délimitation de fentes (13a) s'étendant depuis le haut vers le bas, la largeur de la fente (13b) étant accordée à la grainure des produits en vrac de façon que les particules de matières solides, à part les particules à grain fin, soient retenues dans la partie côté écoulement affluent de l'enceinte de traitement (3, 3a); et dans lequel est disposé au côté d'écoulement effluent de la grille de stabilisation (14; 44) la construction à jalousie avec les lamelles (10; 20) s'étendant transversalement aux éléments de délimitation de fentes.

9. Réacteur selon la revendication 8, caractérisé en ce que les côtés plats des profils en bande (16; 46) croisant les éléments de liaison (15; 45; 55) s'étendent de haut en bas et essentiellement parallèlement à la direction d'écoulement (A) du fluide.

10. Réacteur selon la revendication 8 ou 9, caractérisé en ce que les éléments de délimitation de fentes (13a) ont des profils à peu près triangulaires en section transversale dont un côté est attaqué par le fluide et dont le coin opposé au côté de l'écoulement affluent est relié aux éléments de liaison s'étendant transversalement (15; 45; 55) de la grille de stabilisation (14, 44).

11. Réacteur selon la revendication 9 ou 10, caractérisé en ce qu'il est prévu entre respectivement deux profils en bande avoisinants (16) de la grille de stabilisation (14) un canal essentiellement vertical (17) pour évacuer des particules à grain fin passant à travers le tamis à fentes.

12. Réacteur selon la revendication 11, caractérisé en ce que les canaux (17) formés entre les profils en bande (16) débouchent à l'extrémité inférieure dans une trémie d'évacuation.

13. Réacteur selon l'une des revendications 8 à 12, caractérisé en ce que les éléments de délimitation de fentes (13a) sont réalisés sous forme de tiges rectilignes.

14. Réacteur selon l'une des revendications 8 à 13, caractérisé en ce que le tamis à fentes (4', 5') est constitué de plusieurs tronçons verticaux (41a, 41b; 51a...51c) qui se recouvrent de façon que le tronçon de tamis à fentes (41a; 51a) situé respectivement plus haut chevauche le tronçon situé plus bas (41b, 51b) vers l'enceinte de traitement (3).

15. Réacteur selon la revendication 14, caractérisé en ce que l'extrémité supérieure (42; 52) de chaque tronçon de tamis à fentes (41a, 41b; 51a...51c) est coudée.

16. Réacteur selon la revendication 14 ou 15, caractérisé en ce que les différents éléments de délimitation de fentes (13) de chaque tronçon de tamis à fentes (41a; 51a) sont alignés avec ceux des tronçons de tamis à fentes (41b; 51b) avoisinants.

17. Réacteur selon la revendication 15 ou 16, caractérisé en ce qu'il est associé à chaque tronçon de tamis à fentes (41a, 41b) une grille de stabilisation propre (44) qui est reliée à une zone plane du tronçon de tamis à fentes.

18. Réacteur selon l'une des revendications 8 à 17, caractérisé en ce que le tamis à fentes (13) d'une paroi perméable au fluide (8) délimite le lit de réacteur (3) sur le côté sortie du fluide.

19. Réacteur selon la revendication 18, caractérisé en ce que la construction à jalousie présente des lamelles (10) qui sont disposées suivant une inclinaison en biais vers le haut.

20. Réacteur selon la revendication 19, caractérisé en ce que les lamelles de jalousie (10) sont inclinées suivant un angle compris entre 25° et 35° relativement à la verticale.

21. Réacteur selon les revendications 11 et 19 ou 20, caractérisé en ce que les lamelles (10) de la construction à jalousie sont inclinées relativement aux canaux verticaux (17) de façon que les produits en vrac sur les lamelles sont guidés sous l'influence de la pesanteur dans les canaux.

22. Réacteur selon l'une des revendications 8 à 21, caractérisé en ce que le lit de réacteur est divisé en chambres (3a, 3b) par au moins une paroi (7) essentiellement verticale, perméable au fluide, et en ce qu'il est prévu au côté de l'écoulement effluent de la grille de stabilisation (14) reliée au tamis à fentes (13) une construction à jalousie avec des lamelles (20) inclinées en biais vers le bas.

23. Réacteur selon la revendication 22, caractérisé en ce que les lamelles de jalousie (20) sont inclinées suivant un angle compris entre 15° et 25° relativement à la verticale.

24. Réacteur selon la revendication 22 ou 23, caractérisé en ce que sont associés aux chambres (3a, 3b) séparées par la paroi de séparation (7) des installations séparées d'évacuation de moyen d'adsorption (6a, 6) permettant d'évacuer sélectivement et de régler les colonnes de lit dans les chambres.

25. Réacteur selon l'une des revendications 22 à 24, caractérisé en ce que l'écart de ladite, au moins une, paroi de séparation (7) à la paroi de sortie de fluide (8) est plusieurs fois plus grand que celui à la paroi d'entrée de fluide (9).
